# EUROPEAN PATENT APPLICATION

(11) **EP 2 296 071 A1**
(43) Date of publication of application: **16.03.2011**
(21) Application number: 10170134.0
(22) Date of filing: 20.07.2010
(51) Int. Cl.: G05D 1/02

(54) **Modular and scalable positioning and navigation system**

(30) Priority: 18.08.2009 US 543152; 18.08.2009 US 543127; 18.08.2009 US 543176
(71) Applicant: DEERE & COMPANY, Moline, Illinois 61265-8098 (US)
(72) Inventor: Anderson, Noel W., Fargo, ND 58102 (US)
(74) Representative: Holst, Sönke

(57) **Abstract**

An apparatus includes an autonomous vehicle (102), a modular navigation system (112), and a number of modular components (104). The modular navigation system (112) is coupled to the autonomous vehicle (102).

## Description

### Field of the Invention

The present invention relates generally to systems and methods for navigation and more particularly to systems and methods for mobile robotic navigation. Still more specifically, the present disclosure relates to a method and system for modular and scalable robotic navigation.

### Background of the Invention

The use of robotic devices to perform physical tasks has increased in recent years. Mobile robotic devices can be used to perform a variety of different tasks. These mobile devices may operate in semi-autonomous or fully autonomous modes. Some robotic devices are constrained to operate in a contained area, using different methods to obtain coverage within the contained area. These robotic devices typically have an integrated, fixed positioning and navigation system. Mobile robotic devices often rely on dead reckoning or use of a global positioning system to achieve area coverage. These systems tend to be inefficient and are often cost-prohibitive.

### Summary

One or more of the different illustrative embodiments provide an apparatus that includes an autonomous vehicle, a modular navigation system, and a number of modular components. The modular navigation system is coupled to the autonomous vehicle.

The different illustrative embodiments further provide an apparatus that includes a processor unit, a communications unit, a behavior database, and a base system interface. The processor unit is configured to perform positioning and navigation. The communications unit is coupled to the processor unit. The behavior database is configured to be accessed by the processor unit. The base system interface is coupled to the processor unit and configured to interact with a number of modular components.

The different illustrative embodiments further provide a method for robotic navigation. A task is received to complete in a worksite. The task is performed using a number of base behaviors. A first modular component upgrade is received having a number of first enhanced behaviors. The task is performed using the number of first enhanced behaviors.

### Embodiment of the invention

The features, functions, and advantages can be achieved independently in various embodiments of the present invention or may be combined in yet other embodiments in which further details can be seen with reference to the following description and drawings, in which:
Figure 1 is a block diagram of a worksite environment in which an illustrative embodiment may be implemented;
Figure 2 is a block diagram of a data processing system in accordance with an illustrative embodiment;
Figure 3 is a block diagram of a modular navigation system in accordance with an illustrative embodiment;
Figure 4 is a block diagram of a mobility system in accordance with an illustrative embodiment;
Figure 5 is a block diagram of a sensor system in accordance with an illustrative embodiment;
Figure 6 is a block diagram of a behavior database in accordance with an illustrative embodiment;
Figure 7 is a block diagram of a number of modular components in accordance with an illustrative embodiment;
Figure 8 is a block diagram of a vision module in accordance with an illustrative embodiment;
Figure 9 is a block diagram of a high precision positioning module in accordance with an illustrative embodiment;
Figure 10 is a flowchart illustrating a process for receiving a modular enhancement in accordance with an illustrative embodiment; and
Figure 11 is a flowchart illustrating a process for receiving a modular enhancement in accordance with an illustrative embodiment.

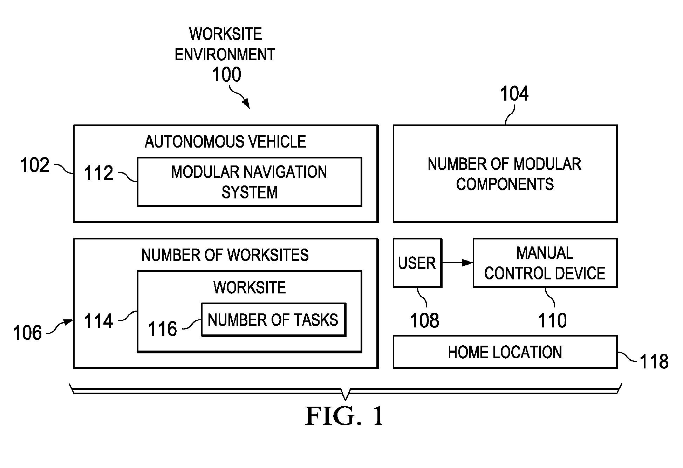

With reference to the figures and in particular with reference to Figure 1, a block diagram of a worksite environment is depicted in which an illustrative embodiment may be implemented. Worksite environment 100 may be any type of worksite environment in which an autonomous vehicle can operate. In an illustrative example, worksite environment 100 may be a structure, building, worksite, area, yard, golf course, indoor environment, outdoor environment, different area, change in the needs of a user, and/or any other suitable worksite environment or combination of worksite environments.

As an illustrative example, a change in the needs of a user may include, without limitation, a user moving from an old location to a new location and operating an autonomous vehicle in the yard of the new location, which is different than the yard of the old location. As another illustrative example, a different area may include, without limitation, operating an autonomous vehicle in both an indoor environment and an outdoor environment, or operating an autonomous vehicle in a front yard and a back yard, for example.

Worksite environment 100 may include autonomous vehicle 102, number of modular components 104, number of worksites 106, user 108, and manual control device 110. Autonomous vehicle 102 may be any type of autonomous vehicle including, without limitation, a mobile robotic machine, a service robot, a robotic mower, a robotic snow removal machine, a robotic vacuum, and/or any other autonomous vehicle. Autonomous vehicle 102 includes modular navigation system 112. Modular navigation system 112 provides a base system for controlling the mobility, positioning, and navigation for autonomous vehicle 102. Base system capabilities may include base behaviors such as, for example, without limitation, base mobility functions for effectuating random area coverage of a worksite, base obstacle avoidance functions for contact switch obstacle avoidance, base dead reckoning for positioning functions, and/or any other combination of basic functionality for autonomous vehicle 102.

Number of modular components 104 are a number of different, independent, attachable, and interchangeable modules for modular navigation system 112. Number of modular components 104 provides upgraded capabilities, or enhanced behaviors, to modular navigation system 112 of autonomous vehicle 102. Enhanced behaviors may be any behavior or functional capability in addition to the base behaviors and functionality of autonomous vehicle 102. For example, in an illustrative embodiment, one enhanced behavior may be additional positioning and/or navigation capabilities to the base system of modular navigation system 112.

Each modular component in number of modular components 104 provides a different level of functionality to modular navigation system 112. Each modular component in number of modular components 104 may have different implemented technology and/or components that provide enhanced behaviors and upgraded capabilities to autonomous vehicle 102. Each modular component in number of modular components 104 may be obtainable at a different price point based on the different implemented technologies and/or components, for example. In an illustrative embodiment, a first interchangeable positioning-navigation component may cost less than a second interchangeable positioning-navigation component because the second interchangeable positioning-navigation component provides more enhanced capabilities and behaviors than the first interchangeable positioning-navigation component, for example.

Number of modular components 104 may include hardware, software, and/or a combination of both hardware and software. For example, in an illustrative embodiment, one modular component may be a vision module providing enhanced vision processing capabilities and a number of cameras to the base system of modular navigation system 112. Autonomous vehicle 102 and modular navigation system 112 may be upgraded by adding and/or replacing a number of modular components 104 based on the needs and/or requirements of a user.

Number of worksites 106 may be any area within worksite environment 100 that autonomous vehicle 102 can operate. Each worksite in number of worksites 106 may be associated with a number of tasks. Worksite 114 is an illustrative example of one worksite in number of worksites 106. For example, in an illustrative embodiment, worksite 114 may be a back yard of a residence of a user. Worksite 114 includes number of tasks 116. In an illustrative example, number of tasks 116 may include mowing the back yard of the residence of a user. Autonomous vehicle 102 may operate to perform number of tasks 116 within worksite 114. As used herein, number refers to one or more items. In one illustrative example, number of worksites 106 may include, without limitation, a primary yard and a secondary yard. The primary yard may be worksite 114, associated with number of tasks 116. The secondary yard may be associated with another set of tasks, for example.

User 108 may be, without limitation, a human operator, a robotic operator, or some other external system. Manual control device 110 may be any type of manual controller, which allows user 108 to override autonomous behaviors and control autonomous vehicle 102. In an illustrative example, user 108 may use manual control device 110 to control movement of autonomous vehicle 102 from home location 118 to worksite 114 in order to perform number of tasks 116.

The illustration of worksite environment 100 in Figure 1 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

The different illustrative embodiments recognize and take into account that currently used methods for robotic navigation often use a very primitive, random navigation system. This random navigation system works within a perimeter established by a wire carrying an electrical signal. The robotic machines in currently used methods may be equipped with an electrical signal detector and a bumper switch on the body of the machine. These machines move in a generally straight direction until they either detect the signal from the perimeter wire or a bumper switch is closed due to contact of the machine with an external object. When either of these two situations occurs, these machines change direction. In this way, current methods constrain the machine within a work area perimeter and maintain movement after contact with external objects.

The different illustrative embodiments further recognize and take into account that currently used systems for robotic navigation are fixed systems integrated into a robotic machine. These fixed systems may include advanced sensors for positioning and navigation, which allows for more efficient and precise coverage, but also increases the expense of the robotic machine by hundreds or thousands of dollars above the price of a robotic machine with basic, random navigation systems.

The different illustrative embodiments further recognize and take into account that currently used methods for robotic navigation raise concerns for consumers when considering whether to move from manned to unmanned machines. Consumers may wonder if the lower cost, yet random coverage ability of some machines will meet aesthetic standards for the machine task. Another concern may be the capability of a machine to work adequately in one environment over another environment. Still another concern may be continual technology updates and the cost of having to replace an entire machine when the fixed navigation systems in current machines become obsolete.

Thus, one or more of the different illustrative embodiments provide an apparatus that includes an autonomous vehicle, a modular navigation system, and a number of modular components. The modular navigation system is coupled to the autonomous vehicle. The different illustrative embodiments further provide an apparatus that includes a processor unit, a communications unit, a behavior database, and a base system interface. The processor unit is configured to perform positioning and navigation. The communications unit is coupled to the processor unit. The behavior database is configured to be accessed by the processor unit. The base system interface is coupled to the processor unit and configured to interact with a number of modular components.

The different illustrative embodiments further provide a method for robotic navigation. A task is received to complete in a worksite. The task is performed using a number of base behaviors. A first modular component upgrade is received having a number of first enhanced behaviors. The task is performed using the number of first enhanced behaviors.

The different illustrative embodiments provide the ability to modularly upgrade a base robotic machine to customer specifications. This allows consumers to enter the market at a lower price point with random pattern area coverage, and still upgrade at a later time if the need for more precise or efficient task capabilities is required. The modular system provided by the different illustrative embodiments provides an upgrade path that allows the consumer to customize a robotic machine according to their ability and requirements in an ongoing timeframe. Additionally, the different illustrative embodiments provide a system that can leverage new technologies as they emerge without rendering the base system obsolete.

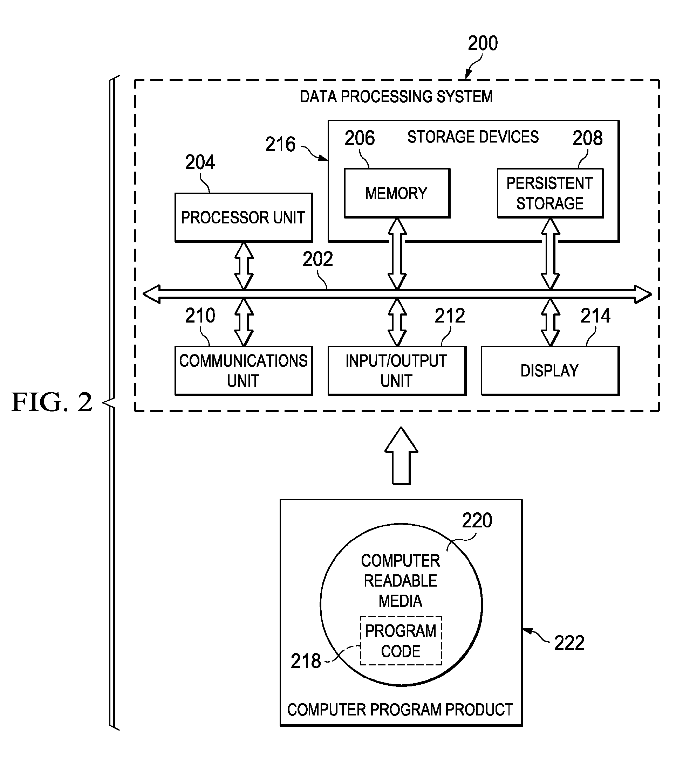

With reference now to Figure 2, a block diagram of a data processing system is depicted in accordance with an illustrative embodiment. Data processing system 200 may be used to implement different computers and data processing systems within a worksite environment, such as modular navigation system 112 in Figure 1.

In this illustrative example, data processing system 200 includes communications fabric 202, which provides communications between processor unit 204, memory 206, persistent storage 208, communications unit 210, input/output (I/O) unit 212, and display 214. Depending on the particular implementation, different architectures and/or configurations of data processing system 200 may be used.

Processor unit 204 serves to execute instructions for software that may be loaded into memory 206. Processor unit 204 may be a set of one or more processors or may be a multi-processor core, depending on the particular implementation. Further, processor unit 204 may be implemented using one or more heterogeneous processor systems in which a main processor is present with secondary processors on a single chip. As another illustrative example, processor unit 204 may be a symmetric multi-processor system containing multiple processors of the same type.

Memory 206 and persistent storage 208 are examples of storage devices 216. A storage device is any piece of hardware that is capable of storing information, such as, for example without limitation, data, program code in functional form, and/or other suitable information either on a temporary basis and/or a permanent basis. Memory 206, in these examples, may be, for example, a random access memory or any other suitable volatile or non-volatile storage device. Persistent storage 208 may take various forms depending on the particular implementation. For example, persistent storage 208 may contain one or more components or devices. For example, persistent storage 208 may be a hard drive, a flash memory, a rewritable optical disk, a rewritable magnetic tape, or some combination of the above. The media used by persistent storage 208 also may be removable. For example, a removable hard drive may be used for persistent storage 208.

Communications unit 210, in these examples, provides for communications with other data processing systems or devices. In these examples, communications unit 210 is a network interface card. Communications unit 210 may provide communications through the use of either or both physical and wireless communications links.

Input/output unit 212 allows for input and output of data with other devices that may be connected to data processing system 200. For example, input/output unit 212 may provide a connection for user input through a keyboard, a mouse, and/or some other suitable input device. Further, input/output unit 212 may send output to a printer. Display 214 provides a mechanism to display information to a user.

Instructions for the operating system, applications and/or programs may be located in storage devices 216, which are in communication with processor unit 204 through communications fabric 202. In these illustrative examples the instruction are in a functional form on persistent storage 208. These instructions may be loaded into memory 206 for execution by processor unit 204. The processes of the different embodiments may be performed by processor unit 204 using computer implemented instructions, which may be located in a memory, such as memory 206.

These instructions are referred to as program code, computer usable program code, or computer readable program code that may be read and executed by a processor in processor unit 204. The program code in the different embodiments may be embodied on different physical or tangible computer readable media, such as memory 206 or persistent storage 208.

Program code 218 is located in a functional form on computer readable media 220 that is selectively removable and may be loaded onto or transferred to data processing system 200 for execution by processor unit 204. Program code 218 and computer readable media 220 form computer program product 222 in these examples. In one example, computer readable media 220 may be in a tangible form, such as, for example, an optical or magnetic disc that is inserted or placed into a drive or other device that is part of persistent storage 208 for transfer onto a storage device, such as a hard drive that is part of persistent storage 208. In a tangible form, computer readable media 220 also may take the form of a persistent storage, such as a hard drive, a thumb drive, or a flash memory that is connected to data processing system 200. The tangible form of computer readable media 220 is also referred to as computer recordable storage media. In some instances, computer recordable media 220 may not be removable.

Alternatively, program code 218 may be transferred to data processing system 200 from computer readable media 220 through a communications link to communications unit 210 and/or through a connection to input/output unit 212. The communications link and/or the connection may be physical or wireless in the illustrative examples. The computer readable media also may take the form of non-tangible media, such as communications links or wireless transmissions containing the program code.

In some illustrative embodiments, program code 218 may be downloaded over a network to persistent storage 208 from another device or data processing system for use within data processing system 200. For instance, program code stored in a computer readable storage medium in a server data processing system may be downloaded over a network from the server to data processing system 200. The data processing system providing program code 218 may be a server computer, a client computer, or some other device capable of storing and transmitting program code 218.

The different components illustrated for data processing system 200 are not meant to provide architectural limitations to the manner in which different embodiments may be implemented. The different illustrative embodiments may be implemented in a data processing system including components in addition to or in place of those illustrated for data processing system 200. Other components shown in Figure 2 can be varied from the illustrative examples shown. The different embodiments may be implemented using any hardware device or system capable of executing program code. As one example, the data processing system may include organic components integrated with inorganic components and/or may be comprised entirely of organic components excluding a human being. For example, a storage device may be comprised of an organic semiconductor.

As another example, a storage device in data processing system 200 is any hardware apparatus that may store data. Memory 206, persistent storage 208, and computer readable media 220 are examples of storage devices in a tangible form.

In another example, a bus system may be used to implement communications fabric 202 and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory 206 or a cache, such as found in an interface and memory controller hub that may be present in communications fabric 202.

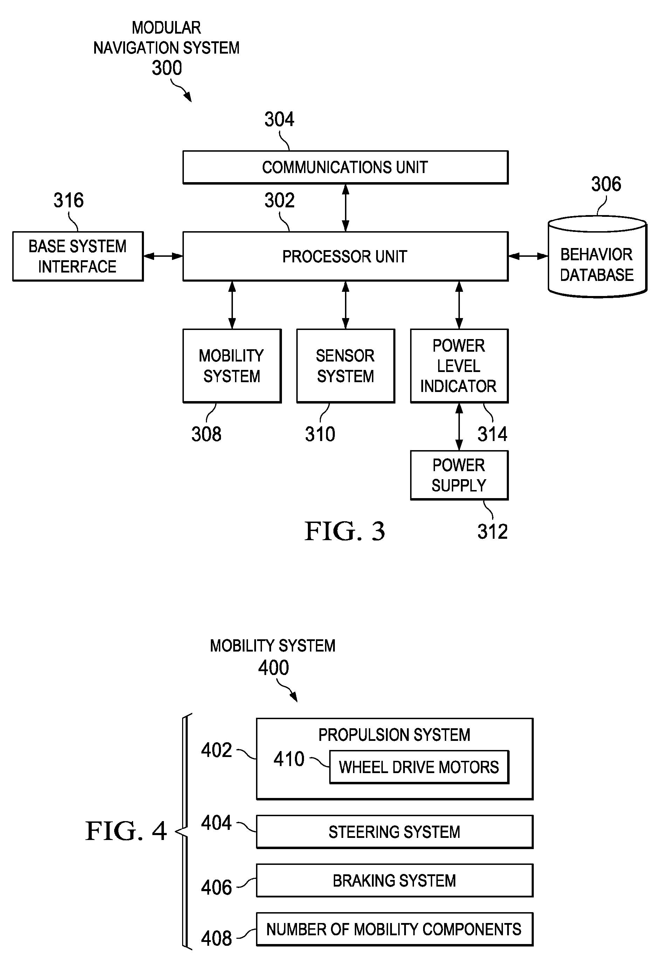

With reference now to Figure 3, a block diagram of a modular navigation system is depicted in accordance with an illustrative embodiment. Modular navigation system 300 is an example of one implementation of modular navigation system 112 in Figure 1.

Modular navigation system 300 includes processor unit 302, communications unit 304, behavior database 306, mobility system 308, sensor system 310, power supply 312, power level indicator 314, and base system interface 316. Processor unit 302 may be an example of one implementation of data processing system 200 in Figure 2. Processor unit 302 is configured to communicate with and control mobility system 308. Processor unit 302 may further communicate with and access data stored in behavior database 306. Accessing data may include any process for storing, retrieving, and/or acting on data in behavior database 306. For example, accessing data may include, without limitation, using a lookup table housed in behavior database 306, running a query process using behavior database 306, and/or any other suitable process for accessing data stored in a database.

Processor unit 302 receives information from sensor system 310 and may use sensor information in conjunction with behavior data from behavior database 306 when controlling mobility system 308. Processor unit 302 may also receive control signals from an outside controller, such as manual control device 110 operated by user 108 in Figure 1 for example. These control signals may be received by processor unit 302 using communications unit 304.

Communications unit 304 may provide communications links to processor unit 302 to receive information. This information includes, for example, data, commands, and/or instructions. Communication unit 304 may take various forms. For example, communication unit 304 may include a wireless communications system, such as a cellular phone system, a Wi-Fi wireless system, a Bluetooth wireless system, or some other suitable wireless communications system.

Communications unit 304 may also include a wired connection to an optional manual controller, such as manual control device 110 in Figure 1, for example. Further, communication unit 304 also may include a communications port, such as, for example, a universal serial bus port, a serial interface, a parallel port interface, a network interface, or some other suitable port to provide a physical communications link. Communication unit 304 may be used to communicate with an external control device or user, for example.

In one illustrative example, processor unit 302 may receive control signals from manual control device 110 operated by user 108 in Figure 1. These control signals may override autonomous behaviors of processor unit 302 and allow user 108 to stop, start, steer, and/or otherwise control the autonomous vehicle associated with modular navigation system 300.

Behavior database 306 contains a number of behavioral actions processor unit 302 may utilize when controlling mobility system 308. Behavior database 306 may include, without limitation, basic machine behaviors, random area coverage behaviors, perimeter behaviors, obstacle avoidance behaviors, manual control behaviors, modular component behaviors, power supply behaviors, and/or any other suitable behaviors for an autonomous vehicle.

Mobility system 308 provides mobility for a robotic machine, such as autonomous vehicle 102 in Figure 1. Mobility system 308 may take various forms. Mobility system 308 may include, for example, without limitation, a propulsion system, steering system, braking system, and mobility components. In these examples, mobility system 308 may receive commands from processor unit 302 and move an associated robotic machine in response to those commands.

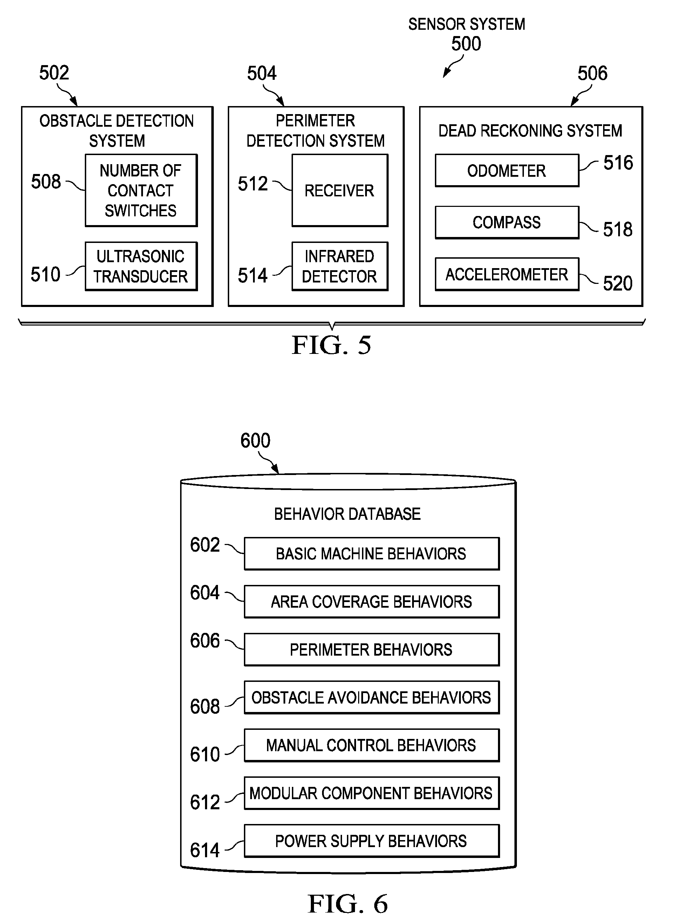

Sensor system 310 may include a number of sensor systems for collecting and transmitting sensor data to processor unit 302. For example, sensor system 310 may include, without limitation, a dead reckoning system, an obstacle detection system, a perimeter detection system, and/or some other suitable type of sensor system, as shown in more illustrative detail in Figure 5. Sensor data is information collected by sensor system 310.

Power supply 312 provides power to components of modular navigation system 300 and the associated autonomous vehicle, such as autonomous vehicle 102 in Figure 1, for example. Power supply 312 may include, without limitation, a battery, mobile battery recharger, ultracapacitor, fuel cell, gas powered generator, photo cells, and/or any other suitable power source. Power level indicator 314 monitors the level of power supply 312 and communicates the power supply level to processor unit 302. In an illustrative example, power level indicator 314 may send information about a low level of power in power supply 312. Processor unit 302 may access behavior database 306 to employ a behavioral action in response to the indication of a low power level, in this illustrative example. For example, without limitation, a behavioral action may be to cease operation of a task and seek a recharging station in response to the detection of a low power level.

Base system interface 316 interacts with a number of modular components, such as number of modular components 104 in Figure 1, which may be added to and/or interchangeably replaced for modular navigation system 300. Base system interface 316 provides power and data communications between the base modular navigation system 300 and the number of modular components that may be added and/or interchangeably replaced. Base system interface 316 is configured to enable a connection between mobility system 308 and the number of modular components. In an illustrative example, a modular component may have an enhanced processor unit that may override processor unit 302 and control mobility system 308 to execute enhanced behaviors and capabilities for an autonomous vehicle having modular navigation system 300.

The illustration of modular navigation system 300 in Figure 3 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

With reference now to Figure 4, a block diagram of a mobility system is depicted in accordance with an illustrative embodiment. Mobility system 400 is an example of one implementation of mobility system 308 in Figure 3.

Mobility system 400 provides mobility for robotic machines associated with a modular navigation system, such as modular navigation system 300 in Figure 3. Mobility system 400 may take various forms. Mobility system 400 may include, for example, without limitation, propulsion system 402, steering system 404, braking system 406, and number of mobility components 408. In these examples, propulsion system 402 may propel or move a robotic machine, such as autonomous vehicle 102 in Figure 1, in response to commands from a modular navigation system, such as modular navigation system 300 in Figure 3.

Propulsion system 402 may maintain or increase the speed at which an autonomous vehicle moves in response to instructions received from a processor unit of a modular navigation system. Propulsion system 402 may be an electrically controlled propulsion system. Propulsion system 402 may be, for example, without limitation, an internal combustion engine, an internal combustion engine/electric hybrid system, an electric engine, or some other suitable propulsion system. In an illustrative example, propulsion system 402 may include wheel drive motors 410. Wheel drive motors 410 may be an electric motor incorporated into a mobility component, such as a wheel, that drives the mobility component directly. In one illustrative embodiment, steering may be accomplished by differentially controlling wheel drive motors 410.

Steering system 404 controls the direction or steering of an autonomous vehicle in response to commands received from a processor unit of a modular navigation system. Steering system 404 may be, for example, without limitation, an electrically controlled hydraulic steering system, an electrically driven rack and pinion steering system, a differential steering system, or some other suitable steering system. In an illustrative example, steering system 404 may include a dedicated wheel configured to control number of mobility components 408.

Braking system 406 may slow down and/or stop an autonomous vehicle in response to commands received from a processor unit of a modular navigation system. Braking system 406 may be an electrically controlled braking system. This braking system may be, for example, without limitation, a hydraulic braking system, a friction braking system, a regenerative braking system using wheel drive motors 410, or some other suitable braking system that may be electrically controlled. In one illustrative embodiment, a modular navigation system may receive commands from an external controller, such as manual control device 110 in Figure 1, to activate an emergency stop. The modular navigation system may send commands to mobility system 400 to control braking system 406 to perform the emergency stop, in this illustrative example.

Number of mobility components 408 provides autonomous vehicles with the capability to move in a number of directions and/or locations in response to instructions received from a processor unit of a modular navigation system and executed by propulsion system 402, steering system 404, and braking system 406. Number of mobility components 408 may be, for example, without limitation, wheels, tracks, feet, rotors, propellers, wings, and/or other suitable components.

The illustration of mobility system 400 in Figure 4 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

With reference now to Figure 5, a block diagram of a sensor system is depicted in accordance with an illustrative embodiment. Sensor system 500 is an example of one implementation of sensor system 310 in Figure 3.

Sensor system 500 includes a number of sensor systems for collecting and transmitting sensor data to a processor unit of a modular navigation system, such as modular navigation system 300 in Figure 3. Sensor system 500 includes obstacle detection system 502, perimeter detection system 504, and dead reckoning system 506.

Obstacle detection system 502 may include, without limitation, number of contact switches 508 and ultrasonic transducer 510. Number of contact switches 508 detects contact by an autonomous vehicle with an external object in the environment, such as worksite environment 100 in Figure 1 for example. Number of contact switches 508 may include, for example, without limitation, bumper switches. Ultrasonic transducer 510 generates high frequency sound waves and evaluates the echo received back. Ultrasonic transducer 510 calculates the time interval between sending the signal, or high frequency sound waves, and receiving the echo to determine the distance to an object.

Perimeter detection system 504 detects a perimeter or boundary of a worksite, such as worksite 114 in Figure 1, and sends information about the perimeter detection to a processor unit of a modular navigation system. Perimeter detection system 504 may include, without limitation, receiver 512 and infrared detector 514. Receiver 512 detects electrical signals, which may be emitted by a wire delineating the perimeter of a worksite, such as worksite 114 in Figure 1, for example. Infrared detector 514 detects infrared light, which may be emitted by an infrared light source along the perimeter of a worksite, such as worksite 114 in Figure 1 for example.

In an illustrative example, receiver 512 may detect an electrical signal from a perimeter wire, and send information about that detected signal to a processor unit of a modular navigation system, such as modular navigation system 300 in Figure 3. The modular navigation system may then send commands to a mobility system, such as mobility system 400 in Figure 4, to alter the direction or course of a mobile robotic unit associated with the modular navigation system, in this illustrative example.

Dead reckoning system 506 estimates the current position of an autonomous vehicle associated with the modular navigation system. Dead reckoning system 506 estimates the current position based on a previously determined position and information about the known or estimated speed over elapsed time and course. Dead reckoning system 506 may include, without limitation, odometer 516, compass 518, and accelerometer 520. Odometer 516 is an electronic or mechanical device used to indicate distance traveled by a machine, such as autonomous vehicle 102 in Figure 1. Compass 518 is a device used to determine position or direction relative to the Earth's magnetic poles. Accelerometer 520 measures the acceleration it experiences relative to freefall.

The illustration of sensor system 500 in Figure 5 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

With reference now to Figure 6, a block diagram of a behavior database is depicted in accordance with an illustrative embodiment. Behavior database 600 is an example of one implementation of behavior database 306 in Figure 3.

Behavior database 600 includes a number of behavioral actions processor unit 302 of modular navigation system 300 may utilize when controlling mobility system 308 in Figure 3. Behavior database 600 may include, without limitation, basic machine behaviors 602, area coverage behaviors 604, perimeter behaviors 606, obstacle avoidance behaviors 608, manual control behaviors 610, modular component behaviors 612, power supply behaviors 614, and/or any other suitable behaviors for an autonomous vehicle.

Basic machine behaviors 602 provide actions for a number of basic tasks an autonomous vehicle may perform. Basic machine behaviors 602 may include, without limitation, mowing, vacuuming, floor scrubbing, leaf removal, snow removal, watering, spraying, and/or any other suitable task.

Area coverage behaviors 604 provide actions for random area coverage when performing basic machine behaviors 602. Perimeter behaviors 606 provide actions for a modular navigation system in response to perimeter detection, such as by perimeter detection system 504 in Figure 5. In an illustrative example, perimeter behaviors 606 may include, without limitation, change heading for an autonomous vehicle by a number of degrees in order to stay within a perimeter.

Obstacle avoidance behaviors 608 provide actions for a modular navigation system to avoid collision with objects in an environment around an autonomous vehicle. In an illustrative example, obstacle avoidance behaviors 608 may include, without limitation, reversing direction and changing heading for an autonomous vehicle by number of degrees before moving forward in order to avoid collision with an object detected by an obstacle detection system, such as obstacle detection system 502 in Figure 5.

Manual control behaviors 610 provide actions for a modular navigation system to disable autonomy and take motion control from a user, such as user 108 in Figure 1 for example. Modular component behaviors 612 provide actions for a modular navigation system to disable random area coverage pattern behaviors, such as area coverage behaviors 604, and accept commands from a higher level processor unit. In an illustrative example, modular navigation system 300 in Figure 3 may detect the addition of a modular component, and access behavior database 306 to employ modular component behaviors 612. Modular component behaviors 612 may direct processor unit 302 of modular navigation system 300 to accept commands from the processor unit of the modular component that has been added, in this illustrative example.

Power supply behaviors 614 provide actions for a modular navigation system to take a number of actions in response to a detected level of power in a power supply, such as power supply 312 in Figure 3. In an illustrative example, power supply behaviors 614 may include, without limitation, stopping the task operation of an autonomous vehicle and seeking out additional power or power recharge for the autonomous vehicle.

The illustration of behavior database 600 in Figure 6 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

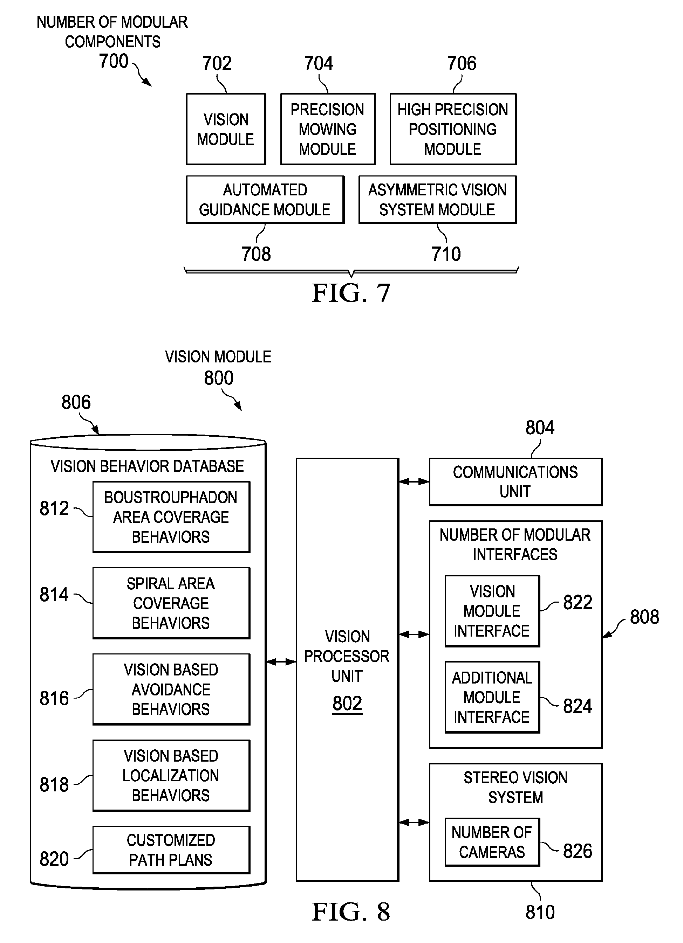

With reference now to Figure 7, a block diagram of a number of modular components is depicted in accordance with an illustrative embodiment. Number of modular components 700 is an example of one implementation of number of modular components 104 in Figure 1.

Number of modular components 700 is a number of compatible and complementary modules to a modular navigation system of an autonomous vehicle, such as autonomous vehicle 102 in Figure 1. Number of modular components 700 provides upgraded capabilities, or enhancements, to a modular navigation system, such as modular navigation system 300 in Figure 3. Each module, or modular component, may include, without limitation, an enhanced processing unit, additional system interfaces, enhanced communication links, enhanced behavior databases, and other additional components.

Number of modular components 700 may includes, without limitation, vision module 702, precision mowing module 704, high precision positioning module 706, automated guidance module 708, and asymmetric vision system module 710.

Vision module 702 provides enhanced capabilities to a modular navigation system for improved positioning and navigation. Precision mowing module 704 provides enhanced capabilities to a modular navigation system for improved control and direction of an autonomous vehicle capable of performing mowing operations.

High precision positioning module 706 provides enhanced capabilities for positioning and navigation beyond that of vision module 702. High precision positioning module 706 may be used in concert with vision module 702 as an upgrade to vision module 702.

Automated guidance module 708 provides enhanced capabilities for autonomous guidance of an autonomous vehicle. Asymmetric vision system module 710 provides enhanced vision capabilities to a modular navigation system. Asymmetric vision system module 710 may be used in concert with vision module 702 as an upgrade to vision module 702.

The illustration of number of modular components 700 in Figure 7 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

With reference now to Figure 8, a block diagram of a vision module is depicted in accordance with an illustrative embodiment. Vision module 800 is an example of one implementation of vision module 702 in Figure 7.

Vision module 800 provides enhanced vision capabilities to a modular navigation system for improved positioning and navigation. Vision module 800 may include, without limitation, vision processor unit 802, communications unit 804, vision behavior database 806, number of modular interfaces 808, and stereo vision system 810.

Vision processor unit 802 provides higher processing capabilities than the base processor unit of a modular navigation system, such as processor unit 302 in Figure 3. Vision processor unit 802 is configured to communicate with the base processor unit of a modular navigation system, such as processor unit 302 of modular navigation system 300 in Figure 3. Vision processor unit 802 communicates with and sends commands through the base processor unit to control the mobility system of an autonomous vehicle. Vision processor unit 802 receives information from the sensor system of the base system, such as sensor system 310 of modular navigation system 300 in Figure 3, and may use the sensor information in conjunction with behavior data from vision behavior database 806 when controlling the mobility system of an autonomous vehicle.

Communications unit 804 may provide additional communication links not provided by the base communications unit of a modular navigation system, such as communications unit 304 in Figure 3. Communications unit 804 may include, for example, without limitation, wireless Ethernet if wireless communications are not part of the base level communications unit.

Vision behavior database 806 includes a number of enhanced behavioral actions vision processor unit 802 may employ. Vision processor unit 802 may communicate with and access data stored in vision behavior database 806. Vision behavior database 806 may include, without limitation, boustrouphadon area coverage behaviors 812, spiral area coverage behaviors 814, vision based avoidance behaviors 816, vision based localization behaviors 818, and customized path plans 820.

Number of modular interfaces 808 interacts with the base system interface, such as base system interface 316 in Figure 3, and a number of additional modular components, such as number of modular components 700 in Figure 7, which may be added to a modular navigation system in concert, or in addition, to vision module 800. Number of modular interfaces 808 includes vision module interface 822 and additional module interface 824. Vision module interface 822 interacts with the base system interface, such as base system interface 316 in Figure 3, to receive power and data communications between the base modular navigation system and vision module 800. Additional module interface 824 provides for the optional addition of another modular component to interface, or interact, with vision module 800.

Vision processor unit 802 may also receive control signals from an outside controller, such as manual control device 110 operated by user 108 in Figure 1 for example. In an illustrative example, these control signals may be received by vision processor unit 802 directly using communications unit 804. In another illustrative example, these control signals may be received by the base processor unit and transmitted to vision processor unit 802 through vision module interface 822 in number of modular interfaces 808.

Stereo vision system 810 includes number of cameras 826. As used herein, number of cameras refers to two or more cameras. Stereo vision system 810 operates to provide depth of field perception by providing images from two or more cameras for enhanced vision capabilities of a modular navigation system. In one illustrative example, stereo vision system 810 may be, for example, without limitation, an asymmetric vision system.

The illustration of vision module 800 in Figure 8 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

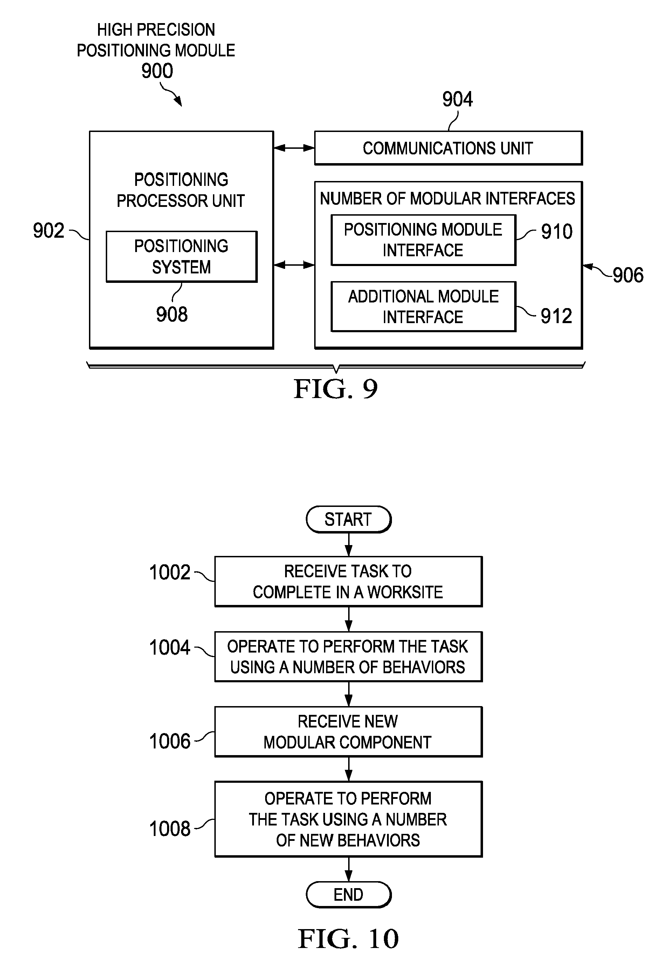

With reference now to Figure 9, a block diagram of a high precision positioning module is depicted in accordance with an illustrative embodiment. High precision positioning module 900 is an example of one implementation of high precision positioning module 706 in Figure 7.

High precision positioning module 900 may provide enhanced accuracy of positioning for tasks that require precision, such as cutting an image into a lawn using a robotic mower for example. High precision positioning module 900 may include, without limitation, positioning processor unit 902, communications unit 904, and number of modular interfaces 906.

Positioning processor unit 902 may include positioning system 908. Positioning system 908 may include, without limitation, real time kinematic global positioning (RTK GPS), radio-frequency based local positioning, laser-based local positioning, and/or any other positioning technology.

Communications unit 904 may provide enhanced physical layer and data protocols, such as, without limitation, Recommended Standard 232 (RS-232), Recommended Standard 485 (RS-485), CAN 2.0, IEEE 802.11 (wireless Ethernet), IEEE 802.15 (Zigbee), and/or any other protocol.

Number of modular interfaces 906 includes positioning module interface 910 and additional module interface 912. Positioning module interface 910 interacts with vision module 800 to receive power and data communications between the base modular navigation system, vision module 800 and high precision positioning module 900. Additional module interface 912 provides for the optional addition of another modular component to interface, or interact, with high precision positioning module 900.

The illustration of high precision positioning module 900 in Figure 9 is not meant to imply physical or architectural limitations to the manner in which different advantageous embodiments may be implemented. Other components in addition and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

With reference now to Figure 10, a flowchart illustrating a process for receiving a modular enhancement is depicted in accordance with an illustrative embodiment. The process in Figure 10 may be implemented by a component such as modular navigation system 300 in Figure 3.

The process begins by receiving a task to complete in a worksite (step 1002). The task may be, for example, mowing a yard. The task may be completed by an autonomous vehicle, such as autonomous vehicle 102, having a modular navigation system, such as modular navigation system 112 in Figure 1. The process operates to perform the task using a number of behaviors (step 1004). The number of behaviors may be, for example, basic machine behaviors and/or area coverage patterns, such as those found in behavior database 600 in Figure 6.

Next, the process receives a new modular component (step 1006). The new modular component may be a module from number of modular components 700 in Figure 7, for example. The new modular component may include a number of new behavioral and processing capabilities. The process operates to perform the task using a number of new behaviors (step 1008), with the process terminating thereafter.

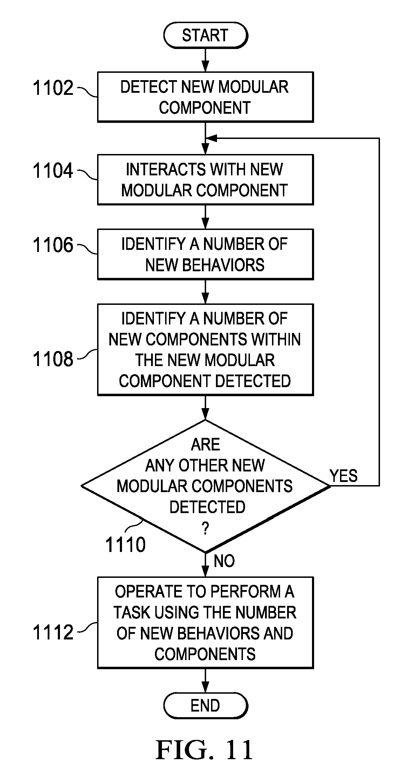

With reference now to Figure 11, a flowchart illustrating a process for receiving a modular enhancement is depicted in accordance with an illustrative embodiment. The process in Figure 11 may be implemented by a component such as modular navigation system 300 in Figure 3.

The process begins by detecting a new modular component (step 1102). The modular component may be detected using an interface, such as base system interface 316 in Figure 3, for example. The process interacts with the new modular components (step 1104). The process may interact with the new modular components by providing power and data from the base system, such as modular navigation system 300 in Figure 3, to the new modular component.

Next, the process identifies a number of new behaviors (step 1106). The number of new behaviors may be located in an enhanced behavioral database of the new modular component, such as vision behavior database 806 of vision module 800 in Figure 8. The process then identifies a number of new components within the new modular component detected (step 1108). The new components may be, for example, without limitation, a component such as stereo vision system 810 in Figure 8.

The process determines whether any other new modular components are detected (step 1110). If the determination is made that there are additional new modular components, the process returns to step 1104. If the determination is made that there are no additional new modular components, the process operates to perform a task using the number of new behaviors and components (step 1112), with the process terminating thereafter.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The different illustrative embodiments recognize and take into account that currently used methods for robotic navigation often use a very primitive, random navigation system. This random navigation system works within a perimeter established by a wire carrying an electrical signal. The robotic machines in currently used methods may be equipped with an electrical signal detector and a bumper switch on the body of the machine. These machines move in a generally straight direction until they either detect the signal from the perimeter wire or a bumper switch is closed due to contact of the machine with an external object. When either of these two situations occurs, these machines change direction. In this way, current methods constrain the machine within a work area perimeter and maintain movement after contact with external objects.

The different illustrative embodiments further recognize and take into account that currently used systems for robotic navigation are fixed systems integrated into a robotic machine. These fixed systems may include advanced sensors for positioning and navigation, which allows for more efficient and precise coverage, but also increases the expense of the robotic machine by hundreds or thousands of dollars above the price of a robotic machine with basic, random navigation systems.

The different illustrative embodiments further recognize and take into account that currently used methods for robotic navigation raise concerns for consumers when considering whether to move from manned to unmanned machines. Consumers may wonder if the lower cost, yet random coverage ability of some machines will meet aesthetic standards for the machine task. Another concern may be the capability of a machine to work adequately in one environment over another environment. Still another concern may be continual technology updates and the cost of having to replace an entire machine when the fixed navigation systems in current machines become obsolete.

Thus, one or more of the different illustrative embodiments provide an apparatus that includes an autonomous vehicle, a modular navigation system, and a number of modular components. The modular navigation system is coupled to the autonomous vehicle.

The different illustrative embodiments further provide an apparatus that includes a processor unit, a communications unit, a behavior database, and a base system interface. The processor unit is configured to perform positioning and navigation. The communications unit is coupled to the processor unit. The behavior database is configured to be accessed by the processor unit. The base system interface is coupled to the processor unit and configured to interact with a number of modular components.

The different illustrative embodiments further provide a method for robotic navigation. A task is received to complete in a worksite. The task is performed using a number of base behaviors. A first modular component upgrade is received having a number of first enhanced behaviors. The task is performed using the number of first enhanced behaviors.

The different illustrative embodiments provide the ability to modularly upgrade a base robotic machine to customer specifications. This allows consumers to enter the market at a lower price point with random pattern area coverage, and still upgrade at a later time if the need for more precise or efficient task capabilities is required. The modular system provided by the different illustrative embodiments provides an upgrade path that allows the consumer to customize a robotic machine according to their ability and requirements in an ongoing timeframe. Additionally, the different illustrative embodiments provide a system that can leverage new technologies as they emerge without rendering the base system obsolete.

## Claims

1. An apparatus comprising:
a processor unit (204) configured to perform positioning and navigation;
a mobility system (308) configured to be controlled by the processor unit (204);
a behavior database (306) configured to be accessed by the processor unit (204); and
a base system interface (316) coupled to the processor unit (204), configured to interact with a number of modular components (104), and configured to enable a connection between the mobility system (308) and the number of modular components (104).

2. The apparatus of claim 1, further comprising:
a sensor system (500) configured to send sensor data to the processor unit (204) and/or a power supply (312) coupled to a power level indicator (314) and configured to provide power to the processor unit (204).

3. The apparatus of claim 1, wherein the number of modular components (104) include at least one of hardware upgrades, software, a first interchangeable positioning-navigation component; and a second interchangeable positioning-navigation component, wherein the second interchangeable positioning navigation component includes different implemented technology and components than the first interchangeable positioning-navigation component.

4. The apparatus of claim 3, wherein the apparatus is upgraded by replacing the first interchangeable positioning-navigation component with the second interchangeable positioning navigation component.

5. The apparatus of claim 4, further comprising:
a first interchangeable positioning-navigation component interface configured to receive a number of tasks based on the worksite environment.

6. The apparatus of claim 5, wherein the worksite environment is at least one of a yard, home, golf course, different area, and change in needs of a user.

7. An autonomous vehicle (102) comprising an apparatus according to one of the preceding claims, including a modular navigation system (112) having a number of independent attachable modular components (104), wherein each independent attachable modular component (104) provides a different level of functionality to the modular navigation system (112);
a mobility system (308) configured to be controlled by the modular navigation system (112); and
a system interface (316) coupled to the modular navigation system (112), configured to interact with the number of independent attachable modular components (104) and provide data communication between any of the independent attachable modular components (104) and the mobility system (308).

8. The apparatus of claim 7, wherein the number of independent attachable modular components (104) further comprises at least one of a vision module (702), a precision mowing module (704), a high precision positioning module (706), an automated guidance module (708), and an asymmetric vision system module (710).

9. The apparatus of claim 8, wherein the vision module (702) further comprises:
a processor unit (802) configured to communicate with and control a base processor unit (302) of the modular navigation system (112);
a vision behavior database having behavioral actions for the vision module (702); and
a number of modular interfaces configured to interact with the modular navigation system (112).

10. The apparatus of claim 7, wherein a first independent attachable modular component (104) is attached to the modular navigation system (112).

11. The apparatus of claim 10, wherein a second independent attachable modular component (104) is attached to the modular navigation system (112) with the first independent attachable modular component (104) still affixed.

12. The apparatus of claim 7, wherein the each independent attachable modular component (104) is interchangeable with a different one of the number of independent attachable modular components (104).

13. The apparatus of claim 7, further comprising:
a sensor system (310) including at least one of a dead reckoning system (506), an obstacle detection system (502), and a perimeter detection system (504).

14. The apparatus of claim 7, further comprising:
a behavior database (600) having a number of behaviors to execute when a number of condition are met, the number of conditions including at least one of a perimeter encountered, an obstacle encountered, a manual controller detected, a higher level positioning and navigation component detected, and a low battery level detected, the behavior database preferably enhanced with a number of additional behaviors dependent upon which independent attachable modular component is attached to the modular navigation system.

15. A method for autonomous vehicle navigation, the method comprising:
receiving a task to complete in a worksite;
performing the task using a number of base behaviors;
receiving a first modular component upgrade having a number of first enhanced behaviors; and
performing the task using the number of first enhanced behaviors.
